# EUROPEAN PATENT SPECIFICATION

(11) **EP 3 539 884 B1**
(45) Date of publication and mention of the grant of the patent: **09.12.2020**
(21) Application number: 19157341.9
(22) Date of filing: 15.02.2019
(51) Int. Cl.: B65B 51/10, B65B 51/26, B65B 51/30, B65B 61/24, B65B 9/10, B65B 9/12, B65B 9/20

(54) **A CART ASSEMBLY FOR A CONVEYING DEVICE**
WAGENANORDNUNG FÜR EINE FÖRDERVORRICHTUNG
ENSEMBLE DE CHARIOT POUR DISPOSITIF DE CONVOYAGE

(30) Priority: 19.02.2018 EP 18157356
(43) Date of publication of application: 18.09.2019
(73) Proprietor: Tetra Laval Holdings & Finance S.A., 1009 Pully (CH)
(72) Inventor: RICCI, CURBASTRO, Fabio, 40064 Ozzano dell' Emilia (IT); PEDRETTI, Richard, John, 41043 Formigine (IT)
(74) Representative: Tetra Pak - Patent Attorneys SE

(56) References cited:
- EP-A1- 1 832 518
- EP-A1- 2 151 390
- EP-A1- 3 053 834
- WO-A2-00/64741

## Description

### TECHNICAL FIELD

The present invention relates to a cart assembly for a conveying device. The conveying device may be part of a packaging apparatus configured to form and seal a plurality of packs containing a pourable food product, or may be part of a capping apparatus for capping said packs.

### BACKGROUND ART

Conveying devices are known, e.g. from document EP 3 053 834 A1, which are provided with one or two tracks along which respective pluralities of cart assemblies cyclically move at very high speed.

In the known configurations, the cart assemblies are movable independently from one another along the respective track.

For achieving such independent movement, linear motors are typically used: in this case, the track is equipped with a plurality of electric coils, which, in a well-known manner, independently control the movement of each cart assembly, the latter being provided with corresponding permanent magnets.

Each cart assembly is typically provided with a body element and one or more tools carried in a movable manner by the body element itself and configured to perform certain operations on one or more given articles.

Generally, the tools are movable, with respect to their respective body element and by means of actuators, e.g. cam devices, between an operative position, in which the tools perform said operations on the article(s), and an idle position, in which the tools are in a stand-by condition.

For example, in the case in which the conveying device is part of a packaging apparatus configured to form and seal a plurality of pillow packs starting from a tube of packaging material, each cart assembly is provided with a forming unit and a sealing unit, i.e. a pair of tools, cyclically movable between:
- an idle position, or open position, in which they are detached from the tube; and
- an operative position, or closed position, in which they contact the tube to define and control the volume of the packs being formed, and to seal each pack at equally spaced, consecutive transversal cross sections.

Typically, each cart assembly is further provided with one or more guide mechanisms configured to allow a precise movement of respective tools between their idle positions and operative positions.

A need is felt in the industry to minimize the number of components of such guide mechanisms, thereby providing compact configurations of the same, though maintaining high precision and accuracy.

### DISCLOSURE OF INVENTION

It is therefore an object of the present invention to provide a cart assembly, which is designed to meet the above-mentioned need in a straightforward and low-cost manner.

This object is achieved by a cart assembly as claimed in claim 1.

### BRIEF DESCRIPTION OF THE DRAWINGS

A preferred, non-limiting embodiment of the present invention will be described by way of example with reference to the accompanying drawings, in which:
Figure 1 is a perspective view, with parts removed for clarity, of two cart assemblies made according to the teachings of the present invention and movable along respective tracks;
Figure 2 is a larger-scale, perspective view of the cart assemblies of Figure 1;
Figures 3 to 5 are schematic, partially sectioned top views, with parts removed for clarity, of a guide mechanism of one of the cart assemblies of Figure 1 during different and consecutive operating conditions;
Figures 6 and 7 are schematic, partially sectioned top views of the guide mechanism of Figure 3 showing details of the same;
Figure 8 is a larger-scale section along line VIII-VIII of Figure 3, with parts removed for clarity; and
Figure 9 and 10 are two different perspective views of the guide mechanism of Figure 3, with parts removed for clarity.

### BEST MODE FOR CARRYING OUT THE INVENTION

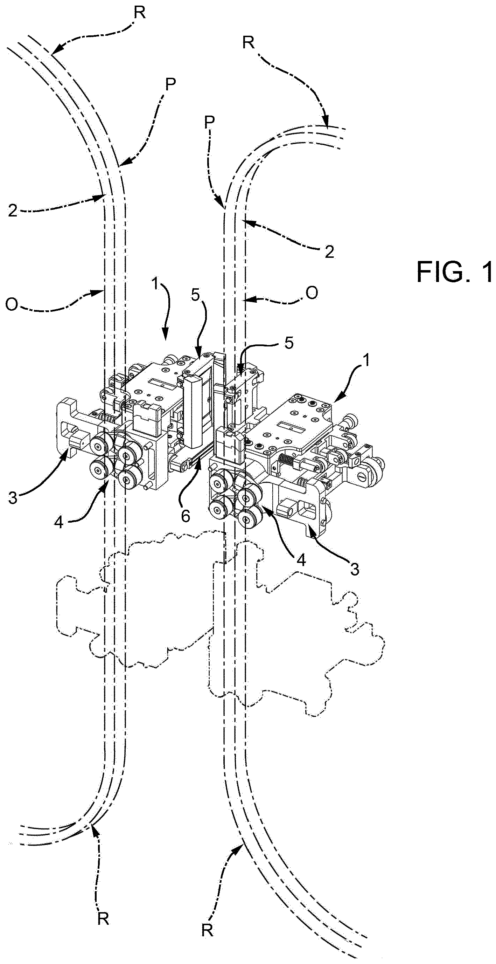

With reference to Figure 1, number 1 indicates as a whole a cart assembly for a conveying device.

In particular, the conveying device is provided with a pair of facing endless tracks 2 (only schematically shown) arranged at opposite lateral sides thereof, and is configured to advance a plurality of cart assemblies 1 along each track 2.

More specifically, each cart assembly 1 moving on one track 2 cooperates with the corresponding cart assembly 1 moving on the other track 2, defining in this way a pair of cooperating cart assemblies 1.

In Figure 1, a pair of such cooperating cart assemblies 1 is illustrated. Each cart assembly 1 substantially comprises a body element 3 cooperating in sliding manner with the respective track 2, preferably by means of a plurality of wheels 4.

In particular, each body element 3 is cyclically movable along the respective track 2 of the conveying device. In this way, each track 2 defines a respective conveying path P for each body element 3 and, thus, for each cart assembly 1 moving thereon.

Preferably, the conveying device is of linear motor type, so that cart assemblies 1 are cyclically movable along tracks 2 independently from one another.

For achieving such independent movement, each track 2 is preferably equipped with magnetic field generators, e.g. a plurality of electric coils, which, in a well-known manner, independently control the movement of each body element 3, the latter being provided with a corresponding permanent magnet unit (not shown).

In practice, each permanent magnet unit is magnetically coupled, in use, with the electric coils of the respective track 2, so that each cart assembly 1 can be independently controlled.

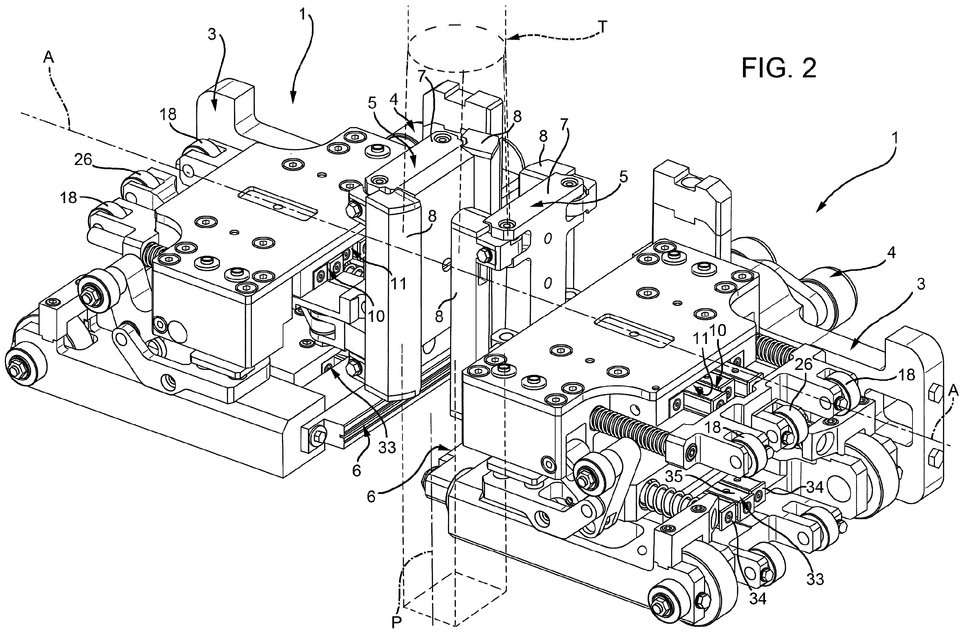

According to this non-limiting preferred embodiment shown, the conveying device is part of a packaging apparatus configured to form and seal a plurality of packs containing a pourable food product starting from a tube T (only schematically shown in Figure 2) of packaging material. In particular, tube T is fed vertically between tracks 2 of the conveying device.

In this case, each cart assembly 1 moving on one track 2 is configured to cooperate with the corresponding cart assembly 1 moving on the other track 2 and with tube T so as to form a plurality of pillow packs and to seal the tube T at equally spaced cross-sections, or sealing bands, crosswise to each conveying path P. Furthermore, such cart assemblies 1 are configured to cooperate with tube T to cut such pillow packs along the sealing bands, in order to separate the pillow packs from one another.

With particular reference to Figure 1, conveying paths P substantially comprise:
- respective operative branches 0, which are substantially rectilinear, parallel and facing each other, between which tube T is fed, and along which cart assemblies 1 cooperate with the tube T, so as to form and seal one respective prismatic pack (partially visible in Figure 2 at the bottom end of tube T) at a time and cut the latter at the relative sealing band; and
- respective return branches R, along which cart assemblies 1 are detached from tube T.

To this end, each cart assembly 1 comprises:
- a first tool, preferably a forming device in the shape of a half-shell 5, configured to cooperate with tube T to form respective packs; and
- a second tool, preferably a sealing device 6, configured to seal each respective formed pack at the relative sealing band.

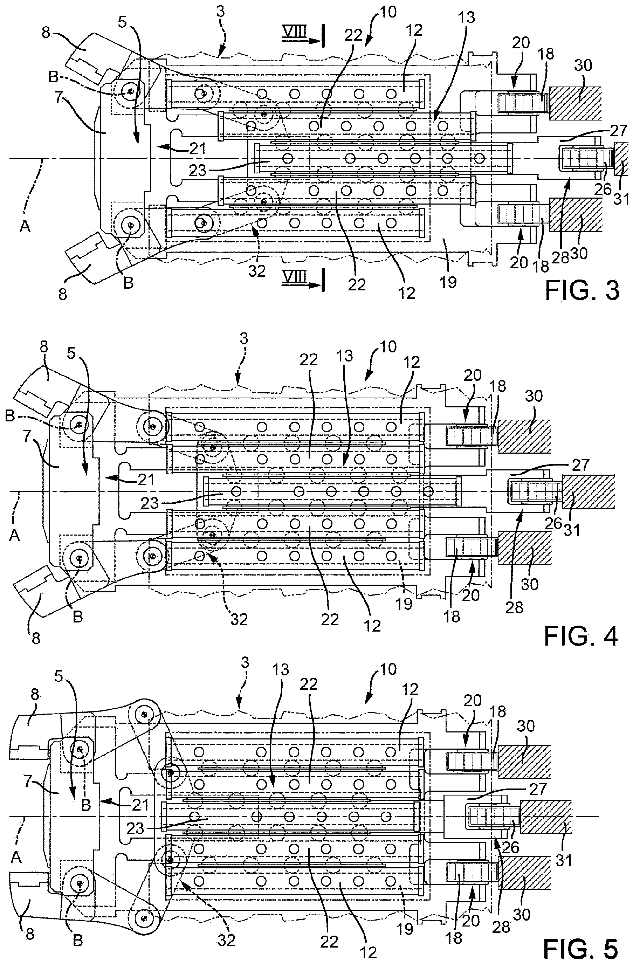

In particular, each half-shell 5 is mounted in a movable manner on body element 3 of each respective cart assembly 1 and has a substantially C-shaped cross section. In greater detail, as visible in Figures 2 to 7, each half-shell 5 comprises a main wall 7 and a pair of lateral flaps 8 projecting from respective opposite lateral edges of wall 7 and hinged thereon in a rotatable manner about respective axes B (Figures 3 to 7) parallel to wall 7. In detail, axes B are parallel to a direction A orthogonal to the operative branch 0 of path P when the relative cart assembly 1 moves along the operative branch 0 of path P.

Each sealing device 6 is mounted in a movable manner on body element 3 of each respective cart assembly 1 moving on one track 2, preferably underneath the corresponding half-shell 5, and comprises a sealing element and an extractable cutting element; each sealing device 6 of each corresponding cart assembly 1 moving on the other track 2 comprises a respective counter-sealing element and a respective seat adapted to receive one respective cutting element.

In the preferred embodiment shown, sealing elements are inductive heating elements and the corresponding counter-sealing elements are made of elastomeric material, which provides the necessary mechanical support to grip tube T to the required pressure.

In light of the above, each cart assembly 1 advances along the respective conveying path P one single half-shell 5 and one single sealing device 6, both carried in a movable manner by the respective body element 3.

In particular, such components are cyclically driven respectively on operative branches 0, along which the corresponding cart assemblies 1 downwardly move parallel to tube T and are arranged on respective opposite sides thereof, and on return branches R, along which such cart assemblies 1 move away from tube T, and consequently back towards tube T again.

More specifically, when each cart assembly 1 moves along operative branch 0 of the respective conveying path P, the respective half-shell 5 and sealing device 6 move back and forth along direction A between:
- an operative position, in which the half-shell 5 and the sealing device 6 cooperate with tube T to form and seal respective packs; and
- an idle position, in which the half-shell 5 and the sealing device 6 are detached from tube T or formed packs.

In particular, when two facing half-shells 5 of a pair of cooperating cart assemblies 1 are both in their operative positions, their walls 7 and flaps 8 face each other to define a substantially prismatic cavity and accordingly control the volume and shape of the relative pack in formation.

As shown in particular in Figures 2 to 7, each cart assembly 1 further comprises a guide mechanism 10 configured to allow the movement of the respective half-shell 5 with respect to the relative body element 3 along direction A.

It is specified that, in the following description, reference is made to one single cart assembly 1, moving along a respective track 2 of the conveying device, and to its respective components. What is stated below is valid also for each cart assembly 1 moving on the same track 2 or the other track 2.

In particular, guide mechanism 10 of such cart assembly 1 is housed in a compartment 11 of body element 3 and comprises:
- two first guide elements 12, rigidly mounted on said body element 3 and extending parallel to direction A; and
- one second guide element, preferably a slider 13, connected to half-shell 5, also extending parallel to direction A, slidably coupled to both guide elements 12 and interposed between them.

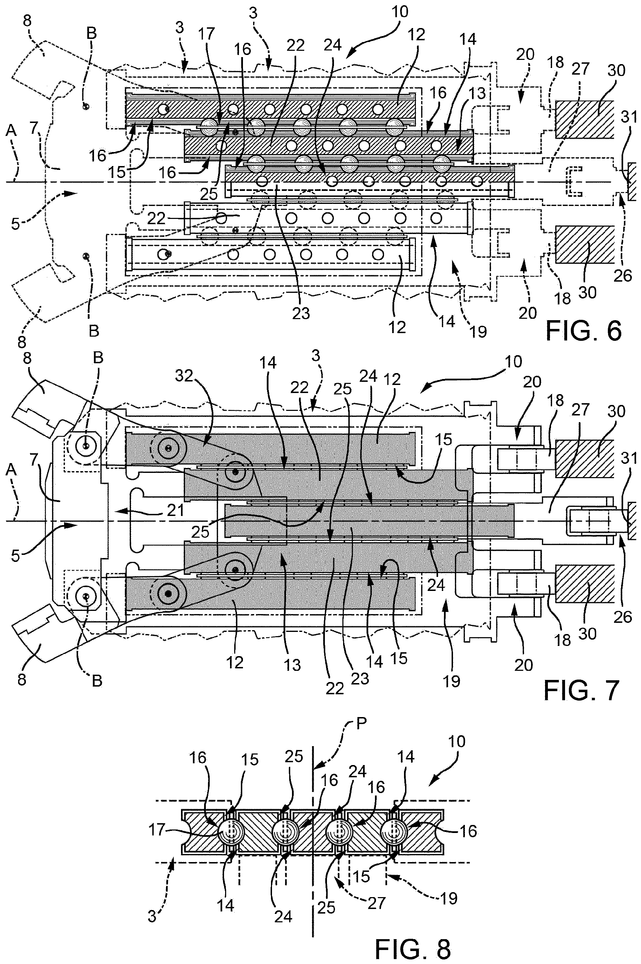

As visible in particular in Figures 6 to 10, slider 13 comprises a pair of opposite lateral surfaces 14, which extend parallel to direction A and along which slider 13 cooperates with both guide elements 12.

In particular, lateral surfaces 14 of slider 13 cooperate in contact with respective lateral surfaces 15 of guide elements 12.

In greater detail, each guide element 12 comprises one lateral surface 15 facing one respective lateral surface 14 of slider 13. Furthermore, both lateral surfaces 14 and lateral surfaces 15 have a respective linear slit 16 adapted to house a low-friction element, preferably a linear bearing 17.

In practice, one linear bearing 17 is arranged between each lateral surface 15 and the facing lateral surface 14, so as to allow slider 13 to slide along direction A with respect to both guide elements 12.

As visible in Figures 2 to 10, cart assembly 1 further comprises actuator means configured to automatically control the movement of slider 13 along direction A.

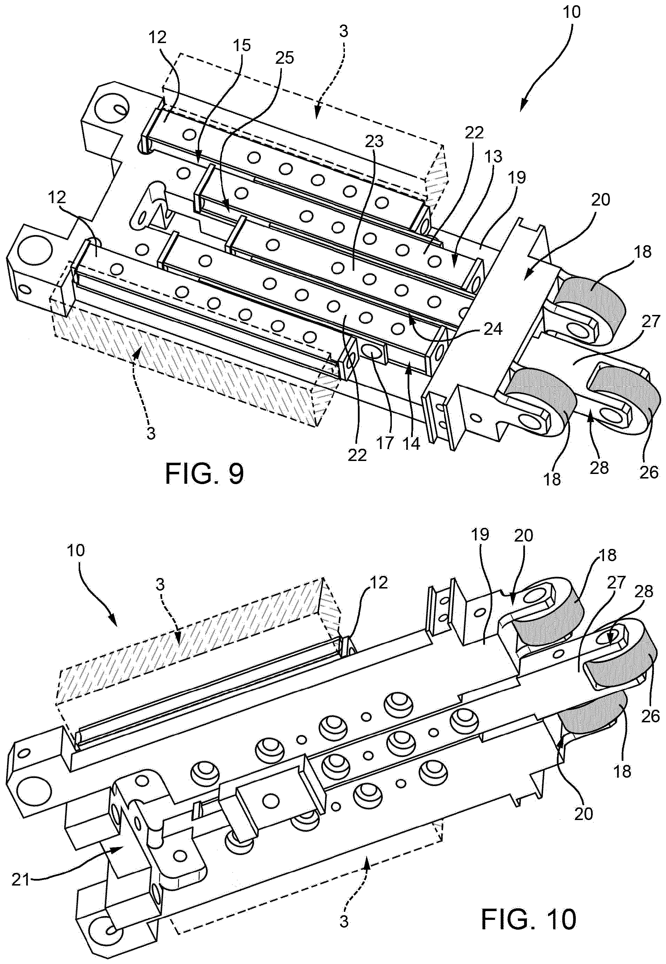

In particular, actuator means comprise:
- a pair of cam surfaces 30, fixed with respect to cart assembly 1 and extending parallel to the respective operative branch 0 and transversally to direction A;
- a pair of cam followers 18 carried by cart assembly 1 and configured to cooperate with cam surfaces 30; and
- a sliding member 19 (Figures 9 and 10) extending parallel to direction A, underneath guide elements 12 and slider 13, and connected to cam followers 18 at a back end 20 thereof.

Furthermore, sliding member 19 carries superiorly slider 13 and further carries, at a front end 21 thereof, wall 7 of half-shell 5.

In practice, as cam followers 18 cooperate, in known manner, with different operative portions of the respective cam surfaces 30, cam followers 18 move back and forth along direction A, causing a corresponding back and forth movement of the sliding member 19 and, thus, of slider 13 along the direction A, with respect to guide elements 12.

With reference to Figures 2 to 10, slider 13 comprises:
- two third guide elements 22, connected to wall 7 of half-shell 5 and extending parallel to direction A; and
- a fourth guide element, preferably a further slider 23, connected to flaps 8 of half-shell 5, also extending parallel to direction A, slidably coupled to both guide elements 22 and interposed between them.

According to this preferred embodiment shown, guide elements 12, guide elements 22, and slider 23 are bar-shaped with a substantially square cross section. In light of the above, guide mechanism 10 has a telescopic structure provided with five bar-shaped guide elements configured to cooperate in a sliding manner with each other.

As visible in particular in Figures 6 to 10, slider 23 comprises a pair of further opposite lateral surfaces 24, which extend parallel to direction A and along which slider 23 cooperates with guide elements 22.

In particular, lateral surfaces 24 of slider 23 cooperate in contact with respective lateral surfaces 25 of guide elements 22.

In greater detail, each guide element 22 comprises one lateral surface 25 facing one respective lateral surface 24 of slider 23. Furthermore, both lateral surfaces 24 and lateral surfaces 25 have a respective linear slit 16 adapted to house a linear bearing 17.

In practice, a linear bearing 17 is arranged between each lateral surface 25 and the facing lateral surface 24, so as to allow slider 23 to slide along direction A with respect to both guide elements 22, in the same manner described above for slider 13 and guide elements 12.

As visible in Figures 2 to 10, cart assembly 1 further comprises further actuator means configured to automatically control the movement of slider 23 along direction A.

In particular, the further actuator means comprise:
- a further cam surface 31, fixed with respect to cart assembly 1 and extending parallel to cam surfaces 30;
- a further cam follower 26 carried by cart assembly 1 and configured to cooperate with cam surface 31; and
- a further sliding member 27 (Figures 9 and 10) extending parallel to direction A, underneath slider 23, and connected to cam follower 26 at a back end 28 thereof.

Furthermore, sliding member 27 carries superiorly slider 23 and is connected to flaps 8 of half-shell 5 by means of a lever mechanism 32, known per se and only schematically shown insofar as necessary for the comprehension of the present invention.

In particular, lever mechanism 32 is configured to convert the movement of sliding member 27 along direction A into the rotation of flaps 8 about the respective axes B towards and away from each other.

In practice, as cam follower 26 cooperates, in known manner, with different operative portions of the respective cam surface 31, cam follower 26 moves back and forth along direction A, causing a corresponding back and forth movement of the sliding member 27 and, thus, of slider 23 along the direction A, with respect to guide elements 22.

Through lever mechanism 32, the transversal movement of slider 23 and sliding member 27 is converted into a rotational movement of flaps 8.

In such a condition, flaps 8 of half-shell 5 rotate from a position in which they diverge from wall 7 to a position in which they are substantially orthogonal to wall 7 and contact tube T to completely surround tube T.

According to the non-limiting preferred embodiment shown, cart assembly 1 also comprises a further guide mechanism 33 (only partially shown in Figure 2) configured to allow the movement of sealing device 6 along direction A with respect to body element 3.

In particular, guide mechanism 33 comprises:
- two first guide elements 34, rigidly mounted on said body element 3 and extending parallel to direction A; and
- one second guide element, preferably a slider 35, connected to sealing device 6, also extending parallel to direction A, slidably coupled to both guide elements 34 and interposed between them.

It is specified that such guide mechanism 33 has similar components and operating scheme to those described above for slider 13.

In light of the above, guide mechanism 33 has a telescopic structure provided with three bar-shaped guide elements configured to cooperate in a sliding manner with each other.

The operation of cart assembly 1 is described hereafter starting from a condition in which two cart assemblies 1 move along tracks 2 respectively, following the relative conveying paths P from return branch R to operative branch 0.

In this condition, each cart assembly 1 approaches the respective operative branch 0, and the relative half-shell 5 and sealing device 6 start to move from their idle positions to their operative positions (Figure 3).

In particular, when each pair of cam followers 18 cooperates with the corresponding cam surface 30, the relative sliding member 19 moves along direction A, so moving wall 7 of the respective half-shell 5 (Figure 4). During this movement, the cooperation between guide elements 12 and slider 13 ensures an accurate and precise displacement of guide elements 12 and slider 13 along direction A.

Then, when each cam follower 26 cooperates with the respective cam surface 31, the relative sliding member 27 moves along direction A, activating the respective lever mechanism 32 and driving flaps 8 of the respective half-shell 5 (Figure 5).

During this movement, the cooperation between guide elements 22 and slider 23 ensures an accurate and precise displacement of guide elements 22 and slider 23 along direction A. After the forming and sealing operation is completed, each half-shell 5 and sealing device 6 return to their idle positions.

It is specified that the same operation scheme to that described for the components of slider 13 applies to guide mechanism 33, with the only difference that guide elements 34 are fixed.

The advantages of cart assembly 1 according to the present invention will be clear from the foregoing description.

In particular, guide mechanism 10 and guide mechanism 33 are provided with three or five guide elements cooperating in contact with each other. More precisely, thanks to the telescopic configuration comprising three guide elements, it is possible to obtain a movement of the relative tool along direction A with the minimum number of components (three) and with the maximum structural compactness with respect to a direction orthogonal to direction A.

Furthermore, thanks to the telescopic configuration comprising five guide elements, it is possible to obtain two relative movements along direction A with the minimum number of components (five) and with the maximum structural compactness with respect to the direction orthogonal to direction A.

Moreover, with such configurations, the overall weight of cart assembly 1 is reduced as well.

Clearly, changes may be made to cart assembly 1 as described herein without, however, departing from the scope of protection as defined in the accompanying claims.

In particular, slider 13, slider 23 and slider 35 may be rigidly mounted on body element 3, so performing the proper function of guide elements, and guide element 12, guide element 22 and guide element 34 may be connected to half-shell 5 or sealing unit 6 and may move relatively to slider 13, slider 23 and slider 35, so as to perform the proper function of sliders.

## Claims

1. A cart assembly (1) for a conveying device, said cart assembly (1) comprising a body element (3), movable along a conveying path (P), and at least one tool (5; 6) carried by said body element (3) in a movable manner between an operative position, in which said tool (5; 6) is designed to perform an operation on a given article (T), and an idle position, in which said tool (5; 6) is in a stand-by condition; said cart assembly (1) further comprising a guide mechanism (10, 13; 33) configured to allow the movement of said tool (5; 6) with respect to said body element (3); said guide mechanism (10, 13; 33) comprising two first guide elements (12, 22; 34), extending parallel to a given direction (A), and one second guide element (13, 23; 35), also extending parallel to said direction (A) and interposed between said first guide elements (12, 22; 34); said first guide elements (12, 22; 34) and second guide element (13, 23; 35) being slidably coupled so as to permit a relative movement along said direction (A) of said second guide element (13, 23; 35) with respect to said first guide elements (12, 22; 34) or vice versa;
wherein said second guide element (13, 23; 35) has opposite lateral surfaces extending parallel to said direction (A) and cooperating in contact with both said respective first guide elements (12, 22; 34);
wherein said direction (A) is transversal with respect to a portion (O) of said path (P) along which said tool (5; 6) moves between said idle position and operative position.

2. The assembly as claimed in claim 1, wherein said lateral surfaces (14, 24) of said second guide element (13, 23; 35) cooperate in contact with respective lateral surfaces (15, 25) of said first guide elements (12, 22; 34) .

3. The assembly as claimed in claim 2, wherein said lateral surfaces (15, 25) of said first guide elements (12, 22; 34) cooperate with said lateral surfaces (14, 24) of said second guide element (13, 23; 35) by means of respective linear bearings (17).

4. The assembly as claimed in any one of the foregoing claims, wherein said second guide element (13) comprises two third guide elements (22) and one fourth guide element (23) interposed between said third guide elements (22); said third guide elements (22) and fourth guide element (23) being slidably coupled so as to permit a relative movement along said direction (A) of said fourth guide element (23) with respect to said third guide elements (22) or vice versa;
said fourth guide element (23) having opposite lateral surfaces (24) extending parallel to said direction (A) and cooperating in contact with both said third guide elements (22).

5. The assembly as claimed in claim 4, wherein said lateral surfaces (24) of said fourth guide element (23) cooperate in contact with respective lateral surfaces (25) of said third guide elements (22).

6. The assembly as claimed in claim 5, wherein said lateral surfaces (25) of said third guide elements (22) cooperate with said lateral surfaces (24) of said fourth guide element (23) by means of respective linear bearings (17) .

7. The assembly as claimed in any one of claims 4 to 6, wherein said tool (5) comprises a first operative portion (7) and a second operative portion (8) movable with respect to said first operative portion (7);
said third guide elements (22) being connected to said first operative portion (7) and said fourth guide elements (23) being connected to said second operative portion (8).

8. The assembly as claimed in claim 7, wherein said first operative portion (7) is configured to move back and forth along said direction (A); said second operative portion (8) being carried by said first operative portion (7) and comprising at least one flap (8) rotatable about an axis (B) transversal to said direction (A) along the portion (O) of said path (P) where said tool (5) moves between said idle and operative positions;
said fourth guide element (23) being connected to said flap (8) by means of a lever mechanism (32); said lever mechanism (32) being configured to convert the movement of said fourth guide element (23) along said direction (A) into the rotation of said flap (8) about said axis (B).

9. The assembly as claimed in any one of the foregoing claims, wherein said first guide elements (12; 34) are rigidly mounted on said body element (3) and said second guide element (13; 35) is connected to said tool (5; 6).

10. A conveying device comprising at least one track (2) and a cart assembly (1) according to any one of claims 1 to 9, wherein said conveying device is of linear motor type.

11. A packaging apparatus including at least one conveying device in turn comprising at least one endless track (2) and one or more cart assemblies (1) according to any one of claims 1 to 9 and movable along said track (2); each cart assembly (1) including at least one tool (5; 6) configured to cooperate with a packaging material (T) so as to form and/or seal a plurality of respective packs for containing a pourable food product.

## Patentansprüche

1. Wagenanordnung (1) für eine Fördervorrichtung, wobei die Wagenanordnung (1) ein Rumpfelement (3), das entlang eines Förderwegs (P) bewegbar ist, und mindestens ein Werkzeug (5; 6) umfasst, das durch das Rumpfelement (3) in einer bewegbaren Weise zwischen einer Betriebsstellung, in der das Werkzeug (5; 6) ausgelegt ist, einen Betriebsvorgang an einem gegebenen Objekt (T) durchzuführen, und einer Ruhestellung, in der das Werkzeug (5; 6) in einem Bereitschaftszustand ist, gehalten ist; wobei die Wagenanordnung (1) ferner einen Führungsmechanismus (10, 13; 33) umfasst, der ausgestaltet ist, die Bewegung des Werkzeugs (5; 6) in Bezug auf das Rumpfelement (3) zu ermöglichen; wobei der Führungsmechanismus (10, 13; 33) zwei erste Führungselemente (12, 22; 34), die sich parallel zu einer vorgegebenen Richtung (A) erstrecken, und ein zweites Führungselement (13, 23; 35), das sich ebenfalls parallel zu der Richtung (A) erstreckt und zwischen den ersten Führungselementen (12, 22; 34) angeordnet ist, umfasst; wobei die ersten Führungselemente (12, 22; 34) und das zweite Führungselement (13, 23; 35) derart verschiebbar gekoppelt sind, dass eine relative Bewegung entlang der Richtung (A) des zweiten Führungselements (13, 23; 35) in Bezug auf die ersten Führungselemente (12, 22; 34) oder umgekehrt zugelassen wird;
wobei das zweite Führungselement (13, 23; 35) gegenüberliegende seitliche Flächen aufweist, die sich parallel zu der Richtung (A) erstrecken und in Kontakt mit beiden der jeweiligen ersten Führungselemente (12, 22; 34) zusammenwirken;
wobei die Richtung (A) in Bezug auf einen Abschnitt (O) des Wegs (P), entlang dessen sich das Werkzeug (5; 6) zwischen der Ruhestellung und der Betriebsstellung bewegt, transversal ist.

2. Anordnung nach Anspruch 1, wobei die seitlichen Flächen (14, 24) des zweiten Führungselements (13, 23; 35) in Kontakt mit jeweiligen seitlichen Flächen (15, 25) der ersten Führungselemente (12, 22; 34) zusammenwirken.

3. Anordnung nach Anspruch 2, wobei die seitlichen Flächen (15, 25) der ersten Führungselemente (12, 22; 34) mit den seitlichen Flächen (14, 24) des zweiten Führungselements (13, 23; 35) mittels jeweiliger Linearlager (17) zusammenwirken.

4. Anordnung nach einem der vorhergehenden Ansprüche, wobei das zweite Führungselement (13) zwei dritte Führungselemente (22) und ein viertes Führungselement (23), das zwischen den dritten Führungselementen (22) angeordnet ist, umfasst; wobei die dritten Führungselemente (22) und das vierte Führungselement (23) derart verschiebbar gekoppelt sind, dass eine relative Bewegung entlang der Richtung (A) des vierten Führungselements (23) in Bezug auf die dritten Führungselemente (22) oder umgekehrt zugelassen wird;
wobei das vierte Führungselement (23) gegenüberliegende seitliche Flächen (24) aufweist, die sich parallel zu der Richtung (A) erstrecken und in Kontakt mit beiden der dritten Führungselemente (22) zusammenwirken.

5. Anordnung nach Anspruch 4, wobei die seitlichen Flächen (24) des vierten Führungselements (23) in Kontakt mit jeweiligen seitlichen Flächen (25) der dritten Führungselemente (22) zusammenwirken.

6. Anordnung nach Anspruch 5, wobei die seitlichen Flächen (25) der dritten Führungselemente (22) mit den seitlichen Flächen (24) des vierten Führungselements (23) mittels jeweiliger Linearlager (17) zusammenwirken.

7. Anordnung nach einem der Ansprüche 4 bis 6, wobei das Werkzeug (5) einen ersten Betriebsabschnitt (7) und einen zweiten Betriebsabschnitt (8), der in Bezug auf den ersten Betriebsabschnitt (7) bewegbar ist, umfasst;
wobei die dritten Führungselemente (22) mit dem ersten Betriebsabschnitt (7) verbunden sind und die vierten Führungselemente (23) mit dem zweiten Betriebsabschnitt (8) verbunden sind.

8. Anordnung nach Anspruch 7, wobei der erste Betriebsabschnitt (7) ausgestaltet ist, sich entlang der Richtung (A) hin und her zu bewegen; wobei der zweite Betriebsabschnitt (8) durch den ersten Betriebsabschnitt (7) gehalten ist und mindestens ein Klappelement (8) umfasst, das um eine Achse (B) transversal zu der Richtung (A) entlang des Abschnitts (O) des Wegs (P) drehbar ist, an dem sich das Werkzeug (5) zwischen der Ruhe- und der Betriebsstellung bewegt;
wobei das vierte Führungselement (23) mit dem Klappelement (8) mittels eines Hebelmechanismus (32) verbunden ist; wobei der Hebelmechanismus (32) ausgestaltet ist, die Bewegung des vierten Führungselements (23) entlang der Richtung (A) in die Drehung des Klappelements (8) um die Achse (B) umzuwandeln.

9. Anordnung nach einem der vorhergehenden Ansprüche, wobei die ersten Führungselemente (12; 34) starr an dem Rumpfelement (3) angebracht sind und das zweite Führungselement (13; 35) mit dem Werkzeug (5; 6) verbunden ist.

10. Fördervorrichtung, umfassend mindestens eine Schiene (2) und eine Wagenanordnung (1) nach einem der Ansprüche 1 bis 9, wobei die Fördervorrichtung vom Linearmotortyp ist.

11. Verpackungseinrichtung, umfassend mindestens eine Fördervorrichtung, die wiederum mindestens eine Endlosschiene (2) und eine oder mehrere entlang der Bahn (2) bewegbare Wagenanordnungen (1) nach einem der Ansprüche 1 bis 9 umfasst; wobei jede Wagenanordnung (1) mindestens ein Werkzeug (5; 6) umfasst, das ausgestaltet ist, mit einem Verpackungsmaterial (T) zusammenzuwirken, um eine Mehrzahl von jeweiligen Verpackungen zum Fassen eines gießbaren Lebensmittelprodukts zu formen und/oder zu versiegeln.

## Revendications

1. Ensemble chariot (1) pour un dispositif transporteur, ledit ensemble chariot (1) comprenant un élément corps (3), mobile le long d'un chemin de transport (P), et au moins un outil (5 ; 6) porté par ledit élément corps (3) d'une manière mobile entre une position fonctionnelle, dans laquelle ledit outil (5 ; 6) est conçu pour réaliser une opération sur un article donné (T), et une position inactive, dans laquelle ledit outil (5 ; 6) est en état d'attente ; ledit ensemble chariot (1) comprenant en outre un mécanisme de guidage (10, 13 ; 33) configuré pour permettre le mouvement dudit outil (5 ; 6) par rapport audit élément corps (3) ; ledit mécanisme de guidage (10, 13 ; 33) comprenant deux premiers éléments de guidage (12, 22 ; 34), s'étendant parallèlement à une direction donnée (A), et un deuxième élément de guidage (13, 23 ; 35), s'étendant également parallèlement à ladite direction (A) et interposé entre lesdits premiers éléments de guidage (12, 22 ; 34) ; lesdits premiers éléments de guidage (12, 22 ; 34) et deuxième élément de guidage (13, 23 ; 35) étant accouplés coulissants de manière à permettre un mouvement relatif suivant ladite direction (A) dudit deuxième élément de guidage (13, 23 ; 35) par rapport auxdits premiers éléments de guidage (12, 22 ; 34) ou vice versa ;
ledit deuxième élément de guidage (13, 23 ; 35) présentant des surfaces latérales opposées s'étendant parallèlement à ladite direction (A) et coopérant en contact avec les deux dits premiers éléments de guidage (12, 22 ; 34) respectifs ;
ladite direction (A) étant transversale par rapport à une partie (O) dudit chemin (P) le long duquel ledit outil (5 ; 6) se déplace entre lesdites positions inactive et fonctionnelle.

2. Ensemble selon la revendication 1, dans lequel lesdites surfaces latérales (14, 24) dudit deuxième élément de guidage (13, 23 ; 35) coopèrent en contact avec des surfaces latérales (15, 25) respectives desdits premiers éléments de guidage (12, 22 ; 34).

3. Ensemble selon la revendication 2, dans lequel lesdites surfaces latérales (15, 25) desdits premiers éléments de guidage (12, 22 ; 34) coopèrent avec lesdites surfaces latérales (14, 24) dudit deuxième élément de guidage (13, 23 ; 35) au moyen de roulements linéaires (17) respectifs.

4. Ensemble selon l'une quelconque des revendications précédentes, dans lequel ledit deuxième élément de guidage (13) comprend deux troisièmes éléments de guidage (22) et un quatrième élément de guidage (23) interposé entre lesdits troisièmes éléments de guidage (22) ; lesdits troisièmes éléments de guidage (22) et quatrième élément de guidage (23) étant accouplés coulissants de manière à permettre un mouvement relatif suivant ladite direction (A) dudit quatrième élément de guidage (23) par rapport auxdits troisièmes éléments de guidage (22) ou vice versa ;
ledit quatrième élément de guidage (23) présentant des surfaces latérales opposées (24) s'étendant parallèlement à ladite direction (A) et coopérant en contact avec les deux dits troisièmes éléments de guidage (22) .

5. Ensemble selon la revendication 4, dans lequel lesdites surfaces latérales (24) dudit quatrième élément de guidage (23) coopèrent en contact avec des surfaces latérales (25) respectives desdits troisièmes éléments de guidage (22).

6. Ensemble selon la revendication 5, dans lequel lesdites surfaces latérales (25) desdits troisièmes éléments de guidage (22) coopèrent avec lesdites surfaces latérales (24) dudit quatrième élément de guidage (23) au moyen de roulements linéaires (17) respectifs.

7. Ensemble selon l'une quelconque des revendications 4 à 6, dans lequel ledit outil (5) comprend une première partie fonctionnelle (7) et une deuxième partie fonctionnelle (8) mobile par rapport à ladite première partie fonctionnelle (7) ;
lesdits troisièmes éléments de guidage (22) étant reliés à ladite première partie fonctionnelle (7) et lesdits quatrièmes éléments de guidage (23) étant reliés à ladite deuxième partie fonctionnelle (8).

8. Ensemble selon la revendication 7, dans lequel ladite première partie fonctionnelle (7) est configurée pour effectuer un mouvement de va-et-vient suivant ladite direction (A) ; ladite deuxième partie fonctionnelle (8) étant portée par ladite première partie fonctionnelle (7) et comprenant au moins un volet (8) rotatif autour d'un axe (B) transversal à ladite direction (A) le long de la partie (O) dudit chemin (P) où ledit outil (5) se déplace entre lesdites positions inactive et fonctionnelle ;
ledit quatrième élément de guidage (23) étant relié audit volet (8) au moyen d'un mécanisme de levier (32) ; ledit mécanisme de levier (32) étant configuré pour convertir le mouvement dudit quatrième élément de guidage (23) suivant ladite direction (A) en la rotation dudit volet (8) autour dudit axe (B).

9. Ensemble selon l'une quelconque des revendications précédentes, dans lequel lesdits premiers éléments de guidage (12 ; 34) sont montés solidaires dudit élément de corps (3) et ledit deuxième élément de guidage (13 ; 35) est relié audit outil (5 ; 6).

10. Dispositif transporteur comprenant au moins une voie de roulement (2) et un ensemble chariot (1) selon l'une quelconque des revendications 1 à 9, lequel dispositif transporteur est de type à moteur linéaire.

11. Appareil de conditionnement comportant au moins un dispositif transporteur comprenant successivement au moins une voie de roulement sans fin (2) et un ou plusieurs ensembles chariots (1) selon l'une quelconque des revendications 1 à 9 et mobiles le long de ladite voie de roulement (2) ; chaque ensemble chariot (1) comportant au moins un outil (5 ; 6) configuré pour coopérer avec un matériau de conditionnement (T) de manière à former et/ou sceller une pluralité d'emballages respectifs destinés à contenir un produit alimentaire versable.
